Europäisches Patentamt

European Patent Office

Office européen des brevets

(11) Publication number: **0 092 621**
**B1**

(12) **EUROPEAN PATENT SPECIFICATION**

(45) Date of publication of patent specification: **20.11.86**

(21) Application number: **82304430.0**

(22) Date of filing: **23.08.82**

(51) Int. Cl.⁴: **B 23 K 35/30**

(54) **A method for surface-welding of austenitic stainless steel.**

(30) Priority: **22.04.82 JP 66361/82**

(43) Date of publication of application:
**02.11.83 Bulletin 83/44**

(45) Publication of the grant of the patent:
**20.11.86 Bulletin 86/47**

(84) Designated Contracting States:
**BE CH DE FR GB IT LI SE**

(56) References cited:
**DE-B-1 219 772**
**GB-A-1 470 911**
**GB-A-2 014 497**
**GB-A-2 041 810**
**US-A-3 210 213**

**WELDING JOURNAL, vol. 54, no. 4, April 1975,
pages 130-s - 135-s, Miami, USA J.M.
STEICHEN et al.: "High strain rate tensile
properties of type 308 SMA weld metal"**

(73) Proprietor: **KAWASAKI STEEL CORPORATION**
**No. 1-28, 1-Chome Kitahonmachi-Dori
Chuo-Ku, Kobe-Shi Hyogo 651 (JP)**

(72) Inventor: **Imanaka, Takuichi**
**9-5, Higashiyayoi-Cho Mizushima
Kurashiki City (JP)**
Inventor: **Nakano, Shosaburo**
**2220-6, Nagao
Mobara City (JP)**
Inventor: **Yasuda, Koichi**
**c/o Research Labs., Kawasaki Steel Corporation
1 Kawasaki-Cho, Chiba City (JP)**
Inventor: **Nishiyama, Noboru**
**4617-2, Goi
Ichihara City (JP)**

(74) Representative: **Overbury, Richard Douglas et al
HASELTINE LAKE & CO Hazlitt House 28
Southampton Buildings Chancery Lane
London WC2A 1AT (GB)**

## Description

The present invention relates to a method of surfacing welding using stainless steel and more particularly is concerned with providing a tower, tank or like vessel formed of carbon steel or a low alloy steel (particularly a reaction vessel wherein hydrogen is handled at a high temperature under a high pressure) with an improved lining by surfacing welding austenitic stainless steel onto the inner surface of the tower, tank or the like and with preventing disbonding of the lined vessel during use.

The inner surface of reaction vessels used for refining petroleum or for liquifying coal is, in most cases, lined with austenitic stainless steel by surfacing welding. These vessels are operated in a hydrogen environment at high temperature under high pressure, so that the deposited metal or the base metal occludes hydrogen. During shutdown, a large amount of hydrogen accumulates at the boundary of the base metal and the deposited metal and separating cracks (so called "disbonding") are caused at the austenite grain boundary. This constitutes a great problem.

As a counter measure for preventing this disbonding, various inventions and proposals have been made but these lower the operation efficiency and are not reliable.

Japanese Patent Laid Open Applications Nos. 107,453/79, 71,746/79 and 14,171/80 disclose that the base metal is underlaid with a metal having substantially the same composition as the base metal or a ferritic stainless steel and is then surfaced with austenitic stainless steel having a given composition. In these cases, a foreign underlaying layer must be superfluously welded. Japanese Patent Laid Open Application No. 117,561/80 proposes that martensite be included as an average composition of the deposited metal but martensite itself is apt to be hardened and embrittled and even if the disbonding resistance is improved, there is the disadvantage that the susceptibility to hydrogen embrittlement of the weld metal itself is increased. It is possible to improve the disbonding resistance by effecting the welding under optimum conditions but when this is carried out by the submerged arc welding process (abbreviated to "SAW" hereinafter) or the electro-slag welding process (abbreviated as "ESW" hereinafter), wherein a band electrode having excellent operating efficiency is used, it is impossible to completely prevent the formation of coarse and large austenite grains at the boundary portion and this causes disbonding.

The object of the present invention is to improve the disbonding resistance irrespective of the presence of coarse and large austenite grains by strengthening the austenite grain boundary itself where the disbonding is caused. This is achieved by balancing the components Si and B in the steel components forming the surfacing layer.

Accordingly, the present invention provides a method of providing an inner surface of a tower, tank or like vessel made of carbon steel or a low alloy steel with an austenitic stainless steel layer by surfacing welding characterised in that the layer is formed from an austenitic stainless steel composition comprising not greater than 0.08% by weight of C, 0.5—3.0% by weight of Mn, 7—16% by weight of Ni, 16—25% by weight of Cr, 0 to 1% by weight of Nb, 0 to 3% by weight of Mo, not greater than 0.75% by weight of Si, not greater than 0.08% by weight of B with the balance being impurities and Fe, the amounts of Si and B being such as to satisfy the following relationship:—

$$\log B\% \geqq 2.4 \times Si\% - 4.1$$

The means for improving the disbonding resistance according to the present invention is effective irrespective of the welding process and the welding conditions, and the corrosion resistance and the hydrogen embrittlement resistance are essentially the same as in prior art methods.

For a better understanding of the invention, and to show how the same may be carried into effect, reference will now be made, by way of example, to the accompanying drawings, in which:

Fig. 1a and Fig. 1b are plan views showing the shape of specimens for the disbonding test and the side bend test wherein two layers are welded;

Fig. 2 is a graph showing the proper range of Si and B in the deposited metals;

Fig. 3a and Fig. 3b are plan views showing the shape of specimens for the disbonding test and the side bend test, wherein one layer is welded, and

Fig. 4 is a perspective view showing the appearance of a specimen for the immersing test in a practically used device.

The inventors have found that B and Si have a close affect on the strength of the austenite grain boundary as shown hereinafter and have investigated and clarified the composition range of the deposited metal which, then surfacing welding using stainless steel, results in excellent disbonding resistance.

## Experiment

On ASME SA 387 Gr 22 steel sheet (denoted by reference numeral 1 in the drawings) (C: 0.15% by weight (percent means "percent by weight" hereinafter), Si: 0.12%, Mn: 0.62%, P: 0.010%, S: 0.008%, Cr: 2.20%, Mo: 0.98% sheet thickness: 75 mm), a first layer (reference numeral 2) was applied by surfacing welding using a band electrode of type 309 (the composition of which is shown in the following Table 1) and a second layer, a surface layer, (reference numeral 3) was applied by surfacing welding using a band electrode of type 347 L (C: 0.01%, Si: 0.35%, Mn: 2.2%, P: 0.022%, S: 0.004%, Ni: 10.1%, Cr: 20.7%, Nb: 0.90%) and using the following fluxes F-1 (CaF₂: 45%, CaO: 10%, MgO: 10%, Al₂O₃: 20%, SiO₂: 15%), F-2

2

(the composition of the flux F-1+0.3% of $B_2O_3$), F-3 (the composition of the flux F-1+0.6% of $B_2O_3$), F-4 (the composition of the flux F-1+1.0% of $B_2O_3$), F-5 (the composition of the flux F-1+9.5% of $B_2O_3$) and F-6 (the composition of the flux F-1+10.5% of $B_2O_3$) under the welding conditions: 2500 A, 28 V and 14 cm/min.

TABLE 1

| Electrode No. | C | Si | Mn | P | S | Ni | Cr |
|---|---|---|---|---|---|---|---|
| D-1 | 0.013 | 0.05 | 1.90 | 0.020 | 0.003 | 11.5 | 20.6 |
| D-2 | " | 0.25 | " | " | " | " | " |
| D-3 | " | 0.45 | " | " | " | " | " |
| D-4 | 0.018 | 0.72 | 2.21 | 0.035 | 0.005 | 12.2 | 21.4 |
| D-5 | " | 0.80 | " | " | " | " | " |

The band electrodes had a thickness of 0.4 mm and a width of 150 mm and the welding process employed, when using the above described fluxes, was ESW surfacing which does not form an arc. B transferred from $B_2O_3$ compounded in the test flux is an element which promotes hot cracking and therefore a dye permeating flow test (JIS Z 2343) was effected after welding the above described first layer to confirm no abnormality, and then the welding of the second layer was effected.

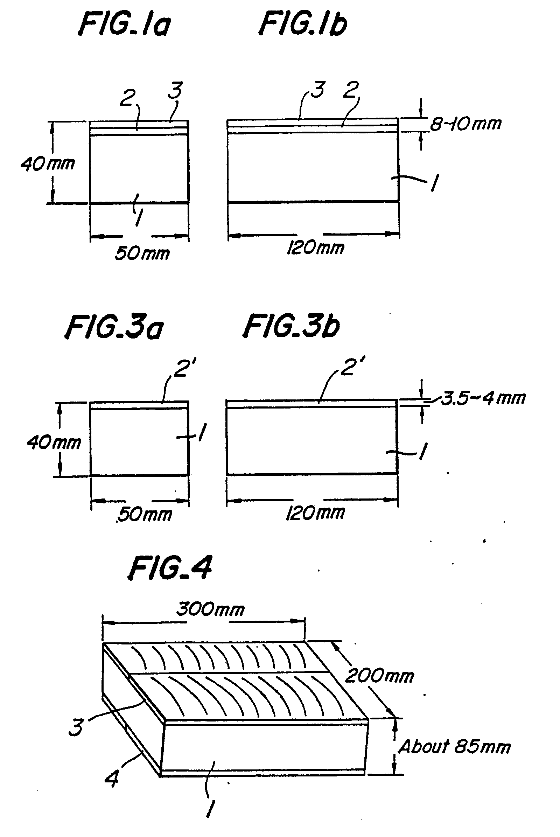

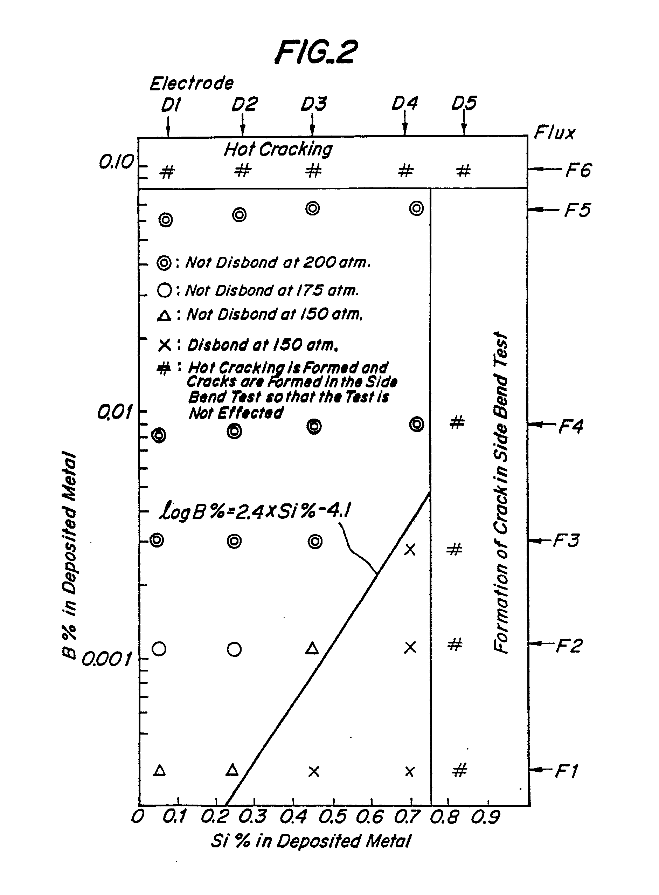

After finishing the welding, a post heat treatment at 690°C for 24 hours was carried out and an autoclave specimen and a side bend specimen as shown in Fig. 1a and 1b were made. The disbonding test was effected as follows. The specimen was placed in an autoclave at 450°C for 48 hours and, by using various hydrogen pressures of 150, 175 and 200 atm., hydrogen was occluded. 72 hours after cooling in air, the disbonding was determined. The disbonding was detected by means of an ultrasonic flaw detector and an indication corresponding to an artifical flow of 2.0 mmφ was referred to as 50% and the case where more than 50% was indicated was judged to constitute "disbonding". The test results are shown in Fig. 2 and the electrode No. and the flux No. corresponding to the amounts of Si and B in the deposited metals are shown therein. The side bend test was carried out following JIS Z 3122 and the formation of cracks was determined. In the specimens welded using the test flux F-6, hot cracking was caused with all electrodes and in the specimens welded using the electrode D-5, cracks were formed in the deposited metals in the side bend test using any flux (mark # in Fig. 2). Thus the disbonding test was carried out with respect to the specimens other than these.

In the case of flux F-1 (no addition of $B_2O_3$), when the amount of Si in the deposited metal is less than 0.25% disbonding does not occur up to the test pressure of 150 atm. However, as the amount of $B_2O_3$ added increases, the limit of the amount of Si increases and when the amount of B in the deposited metal reaches 0.065%, even if the amount of Si in the deposited metal is 0.72%, disbonding is not caused under severe test conditions such as 450°C and 200 atm.

In a conventional reaction vessel (for example a direct desulfurizing apparatus), if the conditions of 450°C and 150 atm. are assumed, the assumable most severe conditions are fully satisfied. Thus it can be confirmed that it is necessary to satisfy the requirement of B≦0.08%, Si≦0.75% and log B%≧2.4×Si%—4.1 in order to ensure that the welding satisfies the hot cracking and side bend tests and disbonding is not caused.

In the present invention, the disbonding resistance is improved due to the strengthening of the austenite grain boundary so the present invention can be applied in principle to austenitic deposited metals having any composition. However the composition is limited because of the necessary requirements for practical use, such as corrosion resistance, mechanical properties and the like. That is, the C content is preferred to be low in order to maintain the corrosion resistance but an amount up to 0.08% is admissible considering the transfer from the base metal and the cost of an electrode.

Mn is effective for preventing the hot cracking and an amount of not less than 0.5% is necessary. However even if an amount of more than 3% is present, the effect is low, so that the amount is preferred to be 0.5—3%.

Ni and Cr need to be present in amounts of not less than 7% and not less than 16% respectively in order to maintain the corrosion resistance but when the amounts of Ni and Cr exceed 16% and 25% respectively, the cost becomes too high because the invention is concerned with reaction vessels and the like and the use of such amounts is pointless.

Either or both of Nb and Mo are effective for improving the corrosion resistance of the grain boundary after post heat treatment but when an excessive amount is added, σ phase is formed and the side bend ductility and the hydrogen embrittlement are impaired. Thus Nb and Mo should not be greater than 1% and not greater than 3%, respectively.

**0 092 621**

The following Examples are given for the purpose of illustration of the invention and are not intended as limitations thereof.

Examples 1—3: Horizontal ESW surfacing welding.

The above mentioned ASME SA 387 Gr 22 steel sheet 1 was subjected to surfacing welding using a band electrode having a thickness of 0.4 mm and a width of 150 mm at a current of 2500 A, a voltage of 28 V and a welding speed of 10—20 cm/min as shown in the following Table 2 to form one layer 2' (Figure 3a) and then subjected to SR treatment at 690°C for 48 hours. Using specimens as shown in Fig. 3a and 3b, hydrogen was occluded in an autoclave at 450°C under 150 atm. for 480 hours and then the thus treated specimens were cooled in air. The composition of the electrode was 0.01% of C, 0.12% of Si, 2.0% of Mn, 0.015% of P, 0.006% of S, 9.96% of Ni, 20.33% of Cr, 0.8% of Nb and 0.003% of B and the flux was the above described F-1.

The composition of, and the test results obtained with, the deposited metals are shown in Table 2. It was confirmed that disbonding did not occur over a broad welding speed range, that is a broad variation range of heat input.

4

TABLE 2

| | Welding speed | C | Si | Mn | Ni | Cr | Nb | B | Disbonding | Hot cracking | Side bend |
|---|---|---|---|---|---|---|---|---|---|---|---|
| Example 1 | 10 cm/min | 0.01 | 0.12 | 1.50 | 9.5 | 18.6 | 0.6 | 0.003 | no | no | good |
| Example 2 | 15 cm/min | 0.01 | 0.10 | 1.45 | 9.0 | 17.6 | 0.6 | 0.003 | no | no | good |
| Example 3 | 20 cm/min | 0.02 | 0.10 | 1.42 | 8.5 | 16.5 | 0.6 | 0.003 | no | no | good |

The composition of the deposited metals presumed from Schaeffler's phase diagram consists of austenite+8% σ ferrite in Example 1, austenite+4% σ ferrite in Example 2 and three phases of austenite+martensite+ferrite in Example 3. The present invention is effective for any phase of deposited metals.

Examples 4—8: Band SAW

One layer surfacing welding was applied on the above described ASME SA 387 GR 22 steel sheet using a band electrode having a composition of 0.05% of C, 0.20% of Si, 2.05% of Mn, 0.015% of P, 0.010% of S, 11.0% of Ni, 21.2% of Cr and a thickness of 0.4 mm and a width of 75 mm and a bonded flux having a base composition of 22% of CaO, 23% of MgO, 10% of $CaF_2$, 25% of $Al_2O_3$ and 20% of $SiO_2$, to which metallic Si and B were added. The test was effected under the same conditions as mentioned above. The welding conditions were 1300 A, 30 V and 18 cm/min. As shown in the following Table 3 by comparing with Comparative Examples 1—5, good results were obtained only when Si and B were present in the range of the present invention.

TABLE 3

|  | C | Si | Mn | Ni | Cr | B | Disbonding | Hot cracking | Side bend |
|---|---|---|---|---|---|---|---|---|---|
| Example 4 | 0.06 | 0.25 | 1.54 | 9.4 | 17.3 | 0.0005 | no | no | good |
| " 5 | 0.05 | 0.30 | 1.50 | 9.2 | 17.6 | 0.001 | no | no | good |
| " 6 | 0.07 | 0.45 | 1.62 | 9.3 | 17.8 | 0.075 | no | no | good |
| " 7 | 0.06 | 0.65 | 1.65 | 9.4 | 17.8 | 0.011 | no | no | good |
| " 8 | 0.06 | 0.62 | 1.80 | 9.6 | 17.6 | 0.078 | no | no | good |
| Comparative example 1 | 0.06 | 0.35 | 1.58 | 9.5 | 17.3 | 0.0004 | caused | no | good |
| " 2 | 0.05 | 0.28 | 1.52 | 9.2 | 17.6 | 0.085 | — | cracked | — |
| " 3 | 0.06 | 0.50 | 1.63 | 9.3 | 17.8 | 0.001 | caused | no | good |
| " 4 | 0.05 | 0.72 | 1.86 | 9.4 | 18.1 | 0.004 | caused | no | good |
| " 5 | 0.06 | 0.85 | 1.86 | 9.4 | 18.2 | 0.015 | — | no | cracked |

—not tested

In Examples 4—8, an additional surfacing was effected using a type 347 L electrode and the disbonding test was carried out with respect to specimens having two surfaced layers. Disbonding was not found.

Examples 9—11: Coated electrode

Type 30 9 L circular rod of 4 mmφ was given a coating containing metallic Si, Ni, Cr, Mo, Nb and $B_2O_3$ and one layer surfacing welding was applied on the above described steel sheet. Hydrogen was occluded in the specimen in a hydrogen environment at 450°C under 150 atm. for 48 hours and the specimen was cooled in air. The result of the disbonding test is shown in the following Table 4.

TABLE 4

|  | C | Si | Mn | Ni | Cr | Nb | Mo | B | Disbonding |
|---|---|---|---|---|---|---|---|---|---|
| Example 9 | 0.031 | 0.35 | 1.68 | 10.12 | 20.35 | — | — | 0.003 | no |
| " 10 | 0.065 | 0.24 | 1.69 | 12.80 | 19.90 | — | 2.2 | 0.008 | no |
| " 11 | 0.052 | 0.35 | 1.78 | 9.35 | 20.82 | 0.64 | — | 0.010 | no |

# 0 092 621

Immersing test in practically used device

Two pass surfacing welding was applied on both surfaces of ASME SA 387 Gr 22 steel sheet 1 (Figure 4) having a thickness of 75 mm by using an electrode of 150 mmϕ (C: 0.01%, Si: 0.12%, Mn: 2.0%, P: 0.015%, S: 0.006%, Ni: 9.96%, Cr: 20.33%, Nb: 0.8%, B: 0.003%) and a flux F-1 under the welding conditions: 2500 A, 28 V and 15 cm/min to form layers 3 and 4 (Figure 4). The surfaced steel sheet was worked into the shape shown in Fig. 4 and then the specimen was immersed in a reconstituted coal pilot plant (operating temperature: 440°C, hydrogen environment: 145 atm) for one year and the disbonding was determined. Disbonding did not occur at either surface of the surfaced portions. Thus it was confirmed that the present invention does not cause disbonding in a practically used device.

In the practice of the present invention, as seen from the Examples, it is desirable, in order to improve the yield of B and reduce the Si content in the deposited metal, that the basicity ($CaO+MgO/SiO_2$) of the flux is made to be more than 1 and that the addition of $CaF_2$ for improving the slag removing ability is more than 10%. When B is added through reduction of boron oxide in the flux, the added amount is less than 9.5%, calculated as $B_2O_3$, as shown in the flux F-5 in order to prevent hot cracking.

When B is added in a form of metal or alloy from a flux or electrode, the yield of B is about 1/6 in the former and about 1/4 in the latter, so that the added amount should be limited to less than 0.6% and 0.4% calculated as B, respectively. Even if the addition of B is effected using the above described processes alone or in combination, when the range is within the admissible range in Fig. 2, there is no problem.

Austenitic stainless steel was used in the Examples. However, the present invention is applicable to inconel, which is completely austenite.

As mentioned above, the present invention can be applied to a surfacing welding process using a band electrode, which process is suitable for lining the inner surface of towers and tanks made of carbon steel or low allow steel, and particularly vessels used for reaction under a hydrogen environment at high temperature and high pressure. The disbonding which conventionally is apt to be caused during use of such a lining, can be effectively prevented without deteriorating the crack susceptibility (which is estimated by the hot cracking or side bend test) so that the reliability of the above described lining process is noticeably improved.

## Claims

1. A method of providing an inner surface of a tower, tank or like vessel made of carbon steel or a low alloy steel with an austenitic stainless steel layer by surfacing welding characterised in that the layer is formed from an austenitic stainless steel composition comprising not greater than 0.08% by weight of C, 0.5—3.0% by weight of Mn, 7—16% by weight of Ni, 16—25% by weight of Cr, 0 to 1% by weight of Nb, 0 to 3% by weight of Mo, not greater than 0.75% by weight of Si, not greater than 0.08% by weight of B with the balance being impurities and Fe, the amounts of Si and B being such as to satisfy the following relationship:—

$$\log \ B\% \geqq 2.4 \times Si\% - 4.1$$

2. A method according to claim 1, wherein a second austenitic stainless steel layer formed from said composition is provided on said layer by surfacing welding.

## Patentansprüche

1. Verfahren zur Ausstattung der Innenfläche eines Turm-, Tank- oder ähnlichen Behälters aus unlegiertem oder niedrig legiertem Stahl mit auslenitischem rostfreien Stahl durch Auftragschweißen dadurch gekennzeichnet, daß die Schicht aus einer austenitischen rostfreien Stahllegierung besteht, die nicht mehr als 0,08 Gewichtsprozent C, 0,5 bis 3,0 Gewichtsprozent Mn, 7 bis 16 Gewichtsprozent Ni, 16 bis 25 Gewichtsprozent Cr, 0 bis 1 Gewichtsprozent Nb, 0 bis 3 Gewichtsprozent Mo, nicht mehr als 0,75 Gewichtsprozent Si, nicht mehr als 0,08 Gewichtsprozent B, Rest Verunreinigungen und Fe enthält, wobei die Mengen von Si und B derart bemessen sind, daß folgende Beziehung gilt:

$$\log \ B\% \geqq 2,4 \times Si\% - 4,1.$$

2. Verfahren nach Anspruch 1, dadurch gekennzeichnet, daß auf der genannten Schicht eine zweite Schicht aus austenitischem rostfreien Stahl mit der genannten Legierungszusammensetzung ausgebildet wird.

## Revendications

1. Un procédé pour munir la surface intérieure d'une tour, d'un réservoir ou d'un récipient similaire en acier au carbone ou faiblement allié, d'une couche d'acier inoxydable austénitique par soudage de surface ou de rechargement, caractérisé en ce que la couche est formée d'une composition d'acier inoxydable austénitique ne comprenant pas plus de 0,08% en poids de C, 0,5 à 3,0% en poids de Mn, 7 à 16% en poids

7

de Ni, 16 à 25% en poids de Cr, 0 à 1% en poids de Nb, 0 à 3% en poids de Mo, pas plus de 0,75% en poids de Si, pas plus de 0,08% en poids de B, le complément étant constitué d'impuretés et de Fe, les quantités de Si et de B étant telles qu'elles satisfassent à la relation suivante:

$$\log B\% \geqq 2,4 \times Si\% - 4,1$$

2. Un procédé selon la revendication 1, dans lequel une seconde couche d'acier inoxydable austénitique présentant ladite composition est disposée sur ladite couche par soudage de surface ou de rechargement.

## FIG.Ia

2    3

40mm

50mm

## FIG.Ib

3    2

8~10mm

1

120mm

## FIG.3a

2'

40mm

1

50mm

## FIG.3b

2'

3.5~4mm

1

120mm

## FIG.4

300mm

200mm

3

4

About 85mm

1

## FIG.2